# EUROPEAN PATENT SPECIFICATION

(11) **EP 0 468 205 B1**
(45) Date of publication and mention of the grant of the patent: **25.01.1995**
(21) Application number: 91110287.9
(22) Date of filing: 21.06.1991
(51) Int. Cl.: B01D 53/56

(54) **Apparatus for treating exhaust gas**
Vorrichtung zur Abgasbehandlung
Dispositif pour le traitement de gaz d'échappement

(30) Priority: 25.06.1990 JP 164215/90
(43) Date of publication of application: 29.01.1992
(73) Proprietor: MITSUBISHI JUKOGYO KABUSHIKI KAISHA, Tokyo (JP)
(72) Inventor: Imamoto, Toshihiko c/o Nagasaki Shipyard & Engine, Nakasaki, Nakasaki Pref. (JP); Kaneko, Shozo c/o Nagasaki Shipyard & Engine Works, Nakasaki, Nagasaki Pref. (JP); Morii, Atsushi c/o Nagasaki Shipyard & Engine, Nakasaki, Nagasaki Pref. (JP); Uchida, Satoshi c/o Nagasaki Shipyard & Engine, Nakasaki, Nagasaki Pref. (JP)
(74) Representative: Behrens, Dieter, Dr.-Ing.

(56) References cited:
- DE-A- 3 642 472
- DE-A- 3 802 871
- FR-A- 2 140 584
- PATENT ABSTRACTS OF JAPAN vol. 11, no. 317 (C-452)(2764) October 15, 1987& JP-A-62 106 824

## Description

### BACKGROUND OF THE INVENTION

### 1. Field of the Invention

The present invention relates to an apparatus for treating an exhaust gas which can be applied in order to remove nitrogen oxides (hereinafter referred to as "NOₓ") from the exhaust gas coming from a boiler, a gas turbine, a diesel engine, a combustion furnace, an incinerator or the like.

### 2. Description of the Related Art

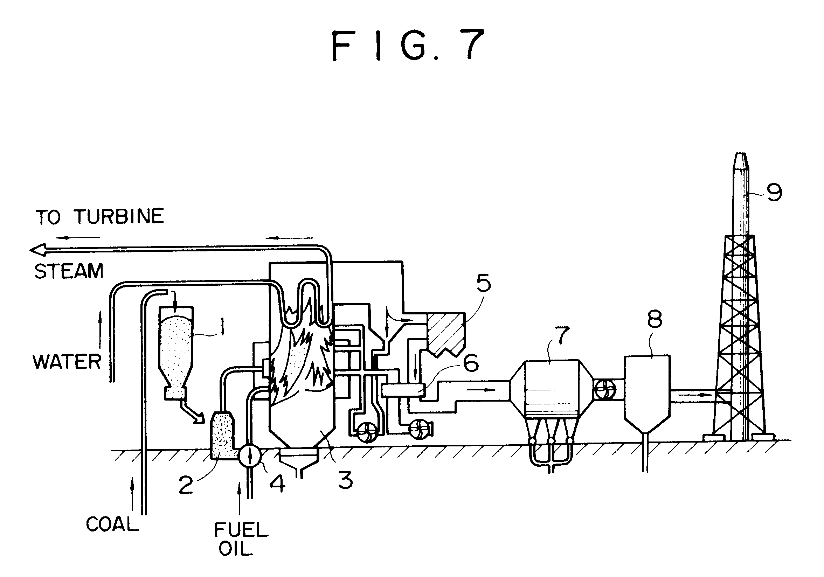

Fig. 7 shows a flow sheet of a conventional system for treating an exhaust gas coming from a coal-fired or an oil-fired boiler.

Coal which is a fuel is temporarily stored in a coal bunker 1, and then delivered to a coal pulverizer 2. Afterward, in this coal pulverizer 2, the coal is pulverized to grains having a grain diameter (which is generally such that about 80% of the coal grains passes through 200 mesh) suitable for combustion in a boiler 3, and the grains are then fed to the boiler 3.
If the fuel is heavy oil, this heavy oil is supplied with pressure by a heavy oil fuel pump 4 and fed to the boiler 3.

A high-temperature combustion gas generated by the combustion of the fuel in a combustion furnace of the boiler 3 feeds heat to the boiler 3 for delivering steam to a turbine, while the temperature of the gas itself lowers, and the gas is then delivered at about 350°C to an exhaust gas denitration apparatus (dry type catalytic denitration apparatus) 5. In this apparatus, harmful components NOₓ (containing NO and NO₂ in a ratio of about 90% and about 10%, respectively) are removed from the exhaust gas. Next, the exhaust gas is forwarded to an air preheater 6, and heat exchange between the exhaust gas and air for combustion is carried out therein, so that the temperature of the exhaust gas lowers to about 140°C. Afterward, dust is removed from the exhaust gas by means of an electric dust collector 7. Furthermore, in an exhaust gas desulfurization apparatus 8, sulfur oxides (SOₓ) are removed from the exhaust gas, and the thus treated exhaust gas is then discharged to the atmosphere through a chimney 9.

As described above, the removal of NOₓ from the exhaust gas is effected by the utilization of the dry type denitration apparatus using a catalyst.

In order to remove NOₓ from the exhaust gas coming from a boiler, a gas turbine, a combustion furnace or the like, the dry type catalytic denitration apparatus has been heretofore used. However, this kind of dry type catalytic denitration apparatus has the following problems to be solved.
(1) Since a gas temperature range suitable for the function of the catalyst is in a limited temperature section of from 300°C to 400°C, a location where the denitration apparatus should be disposed is restricted (usually, it is disposed at the outlet of a fuel economizer in the boiler), and so the arrangement of the plant is restricted.
(2) It is necessary to introduce ammonia into the exhaust gas for the sake of the NOₓ removal. In this case, the reaction is as follows:

   4NO + 4NH₃ + O₂ → 4N₂ + 6H₂O

   A part of ammonia (10% or less, usually 1-3% of fed ammonia) does not react and remains in the exhaust gas, and so it is discharged together with the exhaust gas. Therefore, it is necessary to take measures against ammonia odor.
(3) When a fuel containing sulfur (S) is used, SO₃ is contained in the exhaust gas. Accordingly, in the temperature region of 300°C or less, SO₃ reacts with ammonia to produce acid ammonium sulfate, which brings about a trouble that an apparatus on the downstream side (e.g., an air preheater in the boiler) is clogged. In this connection, the reaction for producing acid ammonium sulfate is as follows:

   SO₃ + NH₃ + H₂O → NH₄HSO₄

   Therefore, to prevent acid ammonium sulfate from being produced, it is required to introduce ammonia into the exhaust gas in the temperature range of 300°C or more, which leads to the restriction on the operation of the plant. In other words, when the temperature of the exhaust gas at the operation start-up of the boiler is 300°C or less, the removal of NOₓ is impossible.
(4) In order to remarkably lower the concentration of NOₓ in the exhaust gas, i.e., to bring a denitration ratio [(inlet NOₓ - outlet NOₓ)/inlet NOₓ x 100 (%)] to 95% or more, a large amount of the catalyst is required, which is not economical.

That is to say, the employment of the conventional dry type catalytic denitration apparatus permits NOₓ to be removed from the exhaust gas but involves various restrictions on the gas temperature and the like. For this reason, an apparatus for treating the exhaust gas is desired which is excellent in the ease of plant design and the stability of operation and which is economical.

### SUMMARY OF THE INVENTION

An object of the present invention is to provide an apparatus for treating an exhaust gas which is capable of solving the above-mentioned problems.

An apparatus for treating an exhaust gas according to the present invention has a dry type catalytic denitration apparatus on the upstream side of the exhaust gas and a plasma denitration apparatus on the downstream side of the dry type catalytic denitration apparatus.

In the present invention, the dry type catalytic denitration apparatus for effectively removing NOₓ from an exhaust gas containing NOₓ at a relatively high concentration is disposed on the upstream side of the exhaust gas having a high NOₓ concentration to carry out the denitration of the exhaust gas. Next, the exhaust gas in which the NOₓ concentration has been decreased by the denitration in the dry type catalytic denitration apparatus is denitrated by the plasma denitration apparatus for effectively removing NOₓ from the exhaust gas having a relatively low NOₓ concentration. Consequently, according to the present invention, the denitration treatment of the exhaust gas can be accomplished efficiently and economically on the whole.

Furthermore, according to the present invention, even when the temperature of the exhaust gas at the time of the operation start-up of an exhaust gas source is so low that the denitration by the dry type catalytic denitration apparatus is impossible, the exhaust gas is denitrated by means of the plasma denitration apparatus using no ammonia to decrease the content of NOₓ in the exhaust gas.

The disposition of the plasma denitration apparatus allows the denitration ratio in the dry type catalytic denitration apparatus to decrease, in contrast to the case that the dry type catalytic denitration apparatus is singly disposed. This constitution enables the necessary amount of the catalyst to decrease.

### BRIEF DESCRIPTION OF THE DRAWINGS

Fig. 1 is a flow sheet of the first example of the present invention;
Fig. 2 is the explanatory diagram and graphs showing one example of NOx concentrations and gas temperatures in the first example of Fig. 1 in case that heavy oil is used as a fuel;
Fig. 3 is a flow sheet of the second example of the present invention;
Fig. 4 is a graph showing NOₓ concentrations and gas temperatures at the time of the operation start-up of a boiler in the above-mentioned first example and in a conventional case;
Fig. 5 is a graph showing the amount of a catalyst in a dry type catalytic denitration apparatus and a denitration rate;
Fig. 6 is a graph showing the relation between the concentration of NOx and the denitration rate in a plasma denitration apparatus; and
Fig. 7 is a flow sheet of a conventional apparatus for treating an exhaust gas coming from a coal-fired or an oil-fired boiler.

### DETAILED DESCRIPTION OF THE PREFERRED EMBODIMENTS

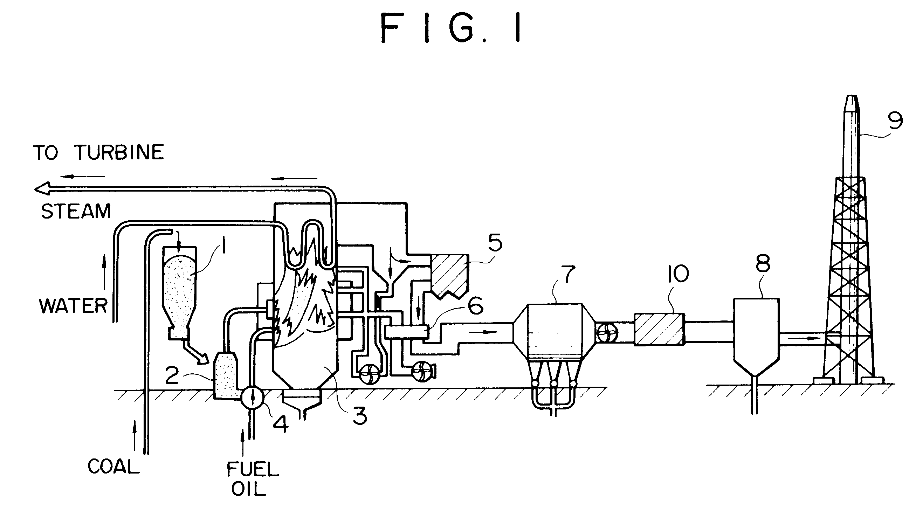

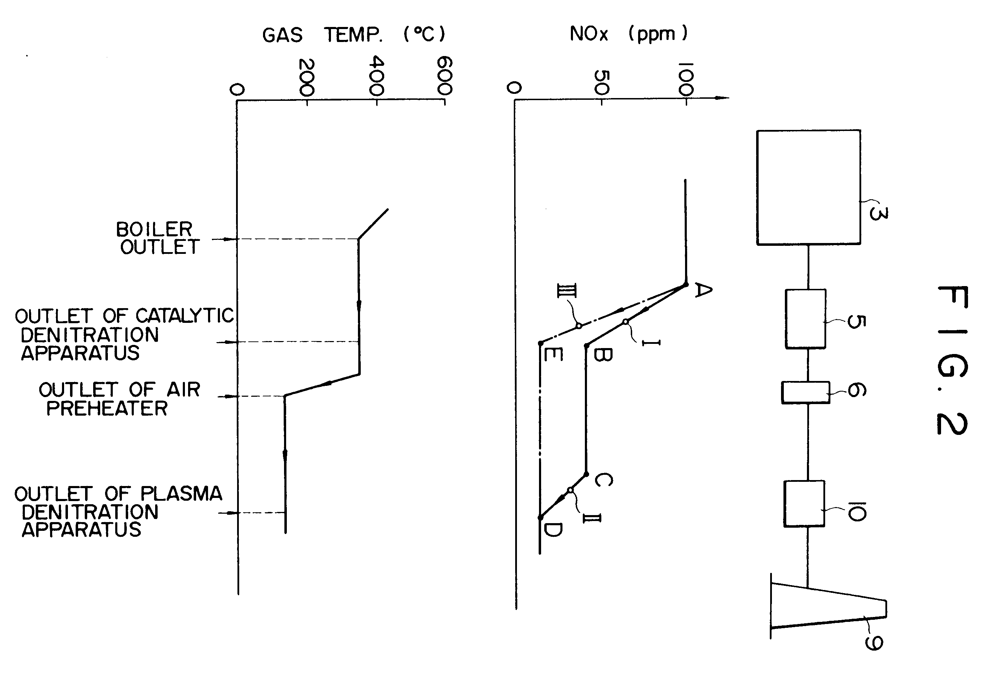

The present invention will be described in reference to Figs. 1 and 2 in accordance with the first example.

In the first example, a hybrid denitration apparatus is used which comprises a combination of a dry type catalytic denitration apparatus 5 and a plasma denitration apparatus 10, and this kind of hybrid denitration apparatus can be applied to a boiler of such a type as shown in Fig. 7. In Fig. 1, the respective portions of a boiler 3 are represented by the same reference numerals as in Fig. 7, and therefore the description of these portions will be omitted.

In the first example, the dry type catalytic denitration apparatus 5 which introduces ammonia into an exhaust gas to denitrate the same is disposed between the exhaust gas outlet of the boiler 3 and an air preheater 6. Furthermore, the plasma denitration apparatus 10 is disposed between an electric dust collector 7 on the downstream side of the air preheater 6 and an exhaust gas desulfurization apparatus 8 on the downstream side of the electric dust collector 7. The exhaust gas coming from the exhaust gas desulfurization apparatus 8 is discharged through a chimney 9 to the atmosphere.

The dry type catalytic denitration apparatus 5 introduces ammonia (NH₃) into the exhaust gas, and NOₓ in the exhaust gas is decomposed into N₂ and H₂O, for example, in accordance with the formula

4NO + 4NH₃ + O₂ → 4N₂ + 6H₂O

by a catalyst with which a reactor of the denitration apparatus is packed.

Furthermore, the above-mentioned plasma denitration apparatus 10 generates plasma in the exhaust gas with the aid of a plasma generator having a high-frequency AC power source and a pair of electrodes, whereby NOₓ in the exhaust gas is decomposed into N₂ and O₂, for example, in accordance with the following formula

2NO → N₂ + O₂.

In this example, the combustion exhaust gas discharged from the boiler 3 is delivered to the dry type catalytic denitration apparatus 5. The first removal of effectively removing NOₓ from the exhaust gas is carried out (e.g., 60% of 100 ppm is denitrated to 40 ppm) by the dry type catalytic denitration apparatus 5 which can effectively remove NOₓ from the exhaust gas containing NOₓ at a relatively high concentration. Afterward, the exhaust gas is forwarded to the plasma denitration apparatus 10 through the air preheater 6 and the electric dust collector 7. In the plasma denitration apparatus 10 which can effectively remove NOₓ from the exhaust gas having a relatively low NOₓ concentration, the second removal, i.e., the final removal of NOₓ from the exhaust gas is effectively carried out (e.g., 80% of 40 ppm is denitrated to 8 ppm).

The exhaust gas from which NOₓ has been removed in this way is then subjected to an SOₓ removal treatment in the exhaust gas desulfurization apparatus 8, and then discharged through the chimney 9 to the atmosphere.

In this embodiment, a typical example in which heavy oil is burned in the boiler 3 is shown in Fig. 2.

The exhaust gas of NOₓ = 100 ppm at the outlet A of the boiler 3 is denitrated as much as 60% [(path I), NOₓ = 40 ppm (point B)] by the dry type catalytic denitration apparatus 5 which can effectively remove NOₓ from the exhaust gas containing NOₓ at a relatively high concentration, and the gas is then discharged from the denitration apparatus 5. Afterward, the gas is cooled from 350°C to 140°C by the air preheater 6, and then delivered to the plasma denitration apparatus 10 (point C) which can effectively remove NOₓ from the exhaust gas having a relatively low NOₓ concentration. In this apparatus 10, the exhaust gas is further denitrated [(path II), NOₓ = 8 ppm (point D)], and then discharged from the denitration apparatus 10. As understood from the foregoing, the hybrid type denitration apparatus comprising the two denitration apparatuses 5 and 10 can economically achieve a denitration ratio of 92%, i.e., from 100 ppm of NOₓ to 8 ppm in total.

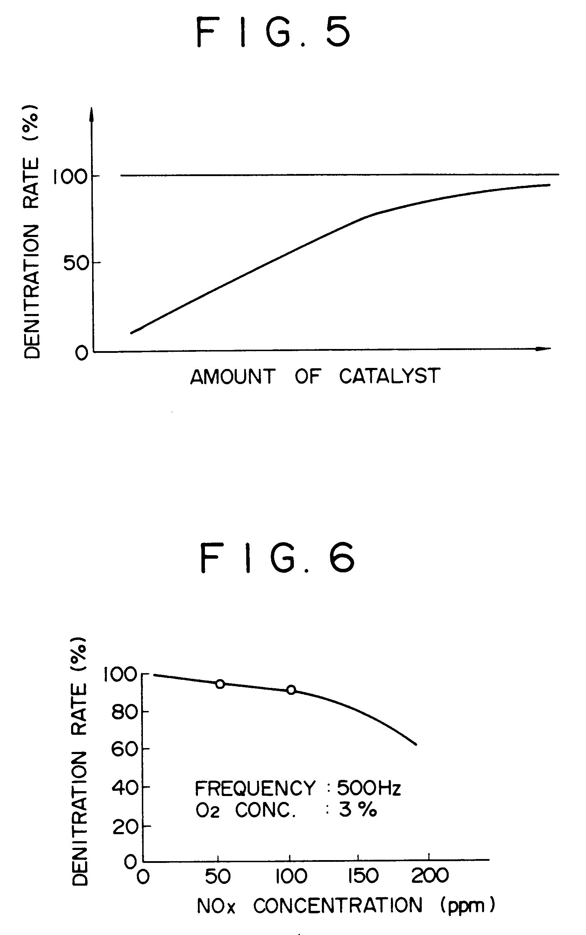

In case that the conventional dry type catalytic denitration apparatus is singly disposed, the denitration is carried out in the range of from point A to point E (path III) in Fig. 2 by the dry type catalytic denitration apparatus. As shown in Fig. 5, when it is intended to obtain a high denitration ratio (80%, for example) by the dry type catalytic denitration apparatus, the necessary amount of the catalyst increases out of proportional to the denitration ratio. In consequence, a great deal of the catalyst is required. Thus, when the dry type catalytic denitration apparatus is only disposed, the amount of the catalyst is too much and the cost of facilities increases. In addition, a space for the disposition of the apparatus and the catalyst also increases. In a certain case, the arrangement of a plant would be impossible.

On the contrary, in the first example of the present invention, the dry type catalytic denitration apparatus 5 can denitrate the exhaust gas to reduce 100 ppm of NOₓ to 40 ppm, and therefore the amount of the catalyst can be decreased remarkably, which permits the decrease of the facility investment and the reduction of the disposition space.

On the other hand, as shown in Fig. 6, the plasma denitration apparatus has the feature by which a high denitration ratio can be achieved in the range of a low NOₓ concentration. In this first example, the exhaust gas is first subjected to a denitration treatment in the dry type catalytic denitration apparatus 5. As a result, as shown in Fig. 2, the concentration of NOₓ lowers to, for example, 40 ppm. Afterward, the exhaust gas is further denitrated in the plasma denitration apparatus 10 which is used as a polisher, whereby NOₓ is effectively and finally removed from the exhaust gas.

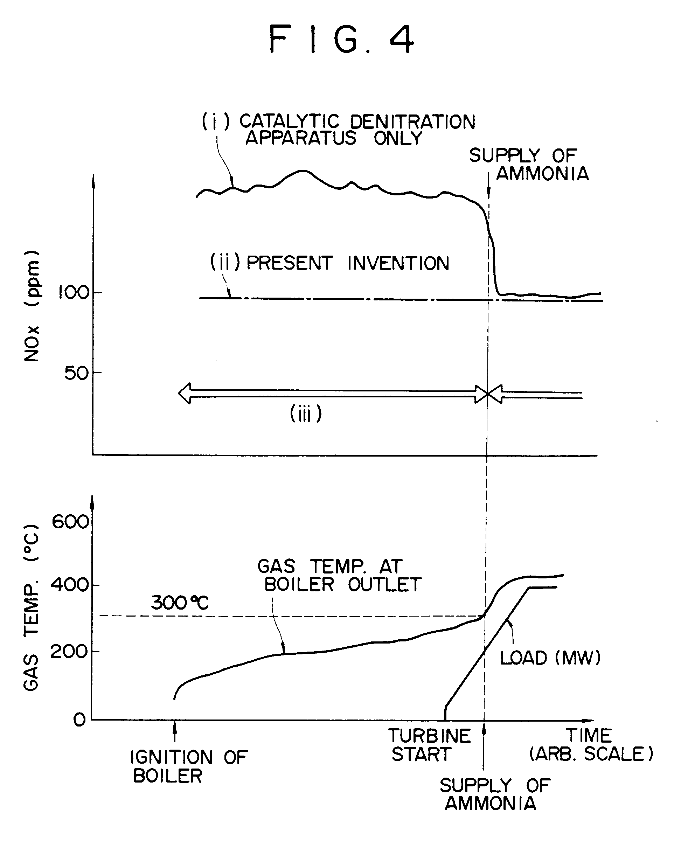

Fig. 4 shows NOx concentrations and gas temperatures at the time of the operation start-up of the boiler. As described above, in the dry type catalytic denitration apparatus, when the temperature of the exhaust gas is 300°C or less, the denitration cannot be carried out in order to prevent acid ammonium sulfate from being produced from ammonia. Hence, as shown in Fig.4, a time interval is required from the ignition of the boiler to the operation start-up of the dry type catalytic denitration apparatus (the introduction of ammonia). This reason, in case that the dry type catalytic denitration apparatus is singly disposed, the nitration cannot be done during this interval. That is to say, as shown by a curve (i) in Fig. 4, the NOₓ concentration in the exhaust gas to be discharged increases in a period (iii) during which the introduction of ammonia is yet to become possible.

On the contrary, in this first example, the plasma denitration apparatus using no ammonia is driven at the time of the operation start-up of the boiler, and therefore the removal of NOₓ can be performed from the operation start point of the boiler. In consequence, as shown by a line (ii) in Fig. 4, the concentration of NOₓ can be controlled so as to be less than a value of NOx set by environmental regulations throughout the operation of the boiler.

As described above, in this example, the dry type catalytic denitration apparatus 5 and the plasma denitration apparatus 10 are disposed on the upstream side and on the downstream side, respectively, whereby NOₓ can be effectively removed from the exhaust gas by the utilization of the two denitration apparatuses 5 and 10, and the amount of the catalyst in the dry type catalytic denitration apparatus 5 can also be decreased. In addition, even when the temperature of the exhaust gas at the time of the operation start-up of the boiler is low, the necessary removal of NOₓ can be carried out.

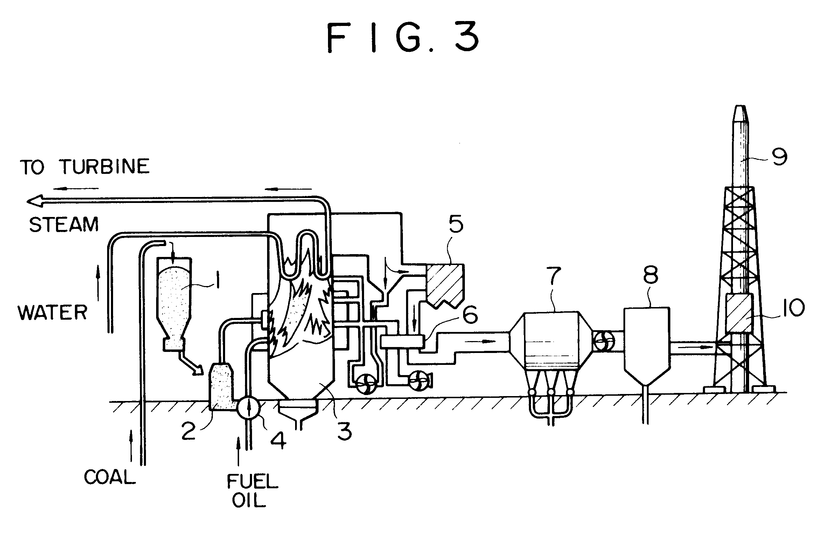

The second example of the present invention will be described in reference to Fig. 3.

This second example is different from the first example in that the plasma denitration apparatus 10 is disposed in the chimney 9.

Also in the second example, the combustion exhaust gas coming from the boiler 3 is first subjected to an NOₓ removal treatment (the first stage) by the dry type catalytic denitration apparatus 5, as in the first example. Afterward, the exhaust gas is forwarded to the plasma denitration apparatus 10 disposed in the chimney 9 through the air preheater 6, the electric dust collector 7 and the exhaust gas desulfurization apparatus 8. In this plasma denitration apparatus 10, the final removal (the second stage) of NOₓ is carried out.

The use of the plasma denitration apparatus 10 is not restricted by the temperature of the gas, and hence the plasma denitration apparatus 10 can be disposed in the chimney 9, as in this second example. Also in the second example, the same function and effect as in the first example can be obtained, and in addition, this second example permits the decrease of the required space.

The present invention represents the following advantages.
(1) The present invention effectively utilizes the feature of the dry type catalytic denitration apparatus by which NOₓ can be effectively removed from the exhaust gas containing NOₓ at a relatively high concentration and the feature of the plasma denitration apparatus by which NOₓ can be effectively removed from the exhaust gas having a relatively low NOₓ concentration . The disposition of the dry type catalytic denitration apparatus on the upstream side and the plasma denitration apparatus on the downstream side permits the provision of the economical apparatus which can treat (remove NOₓ from) the exhaust gas in a high denitration ratio and which is excellent in the stability and the ease of its operation.
(2) According to the present invention, the required amount of the catalyst can be decreased in contrast to a case that the dry type catalytic denitration apparatus is singly disposed. In consequence, the size of the apparatus can be reduced.
(3) Even when the temperature of the exhaust gas is so low that the dry type catalytic denitration apparatus cannot be operated, the desired and necessary denitration can be carried out by the plasma denitration apparatus.

## Claims

1. An apparatus for treating an exhaust gas with a dry type catalytic denitration apparatus characterized by disposing the said dry type catalytic denitration apparatus on the upstream side of the exhaust gas and a plasma denitration apparatus on the downstream side of said dry type catalytic denitration apparatus.

2. The apparatus for treating an exhaust gas according to Claim 1 wherein an air preheater and an electric dust collector are disposed between said dry type catalytic denitration apparatus and said plasma denitration apparatus.

3. The apparatus for treating an exhaust gas according to Claim 1 wherein an air preheater, an electric dust collector and an exhaust gas desulfurization apparatus are disposed between said dry type catalytic denitration apparatus and said plasma denitration apparatus.

4. The apparatus for treating an exhaust gas according to Claim 1 or 3 wherein said plasma denitration apparatus is disposed in a chimney.

## Patentansprüche

1. Vorrichtung zur Abgasbehandlung mit einer trockenarbeitenden katalytischen Denitriervorrichtung,
dadurch **gekennzeichnet,** daß
die genannte trockenarbeitende katalytische Denitriervorrichtung auf der oberstromig gelegenen Seite des Abgases und eine Plasma-Denitriervorrichtung auf der unterstromig gelegenen Seite der genannten trockenarbeitenden katalytischen Denitriervorrichtung angeordnet sind.

2. Vorrichtung zur Abgasbehandlung nach Anspruch 1, bei der ein Luftvorwärmer und ein elektrischer Staubsammler zwischen der genannten trockenarbeitenden katalytischen Denitriervorrichtung und der genannten Plasma-Denitriervorrichtung angeordnet sind.

3. Vorrichtung zur Abgasbehandlung nach Anspruch 1, bei der ein Luftvorwärmer, ein elektrischer Staubsammler und eine Abgas-Entschwefelungsvorrichtung zwischen der genannten trockenarbeitenden katalytischen Denitriervorrichtung und der genannten Plasma-Denitriervorrichtung angeordnet sind.

4. Vorrichtung zur Abgasbehandlung nach Anspruch 1 oder 3, bei der
die genannte Plasma-Denitriervorrichtung in einem Kamin angeordnet ist.

## Revendications

1. Dispositif pour le traitement d'un gaz d'échappement avec un appareil de dénitration catalytique par voie sèche,
**caractérisé** en ce que
ledit appareil de dénitration catalytique par voie sèche est disposé en amont du gaz d'échappement, et un appareil de dénitration au plasma est disposé en aval dudit appareil de dénitration catalytique par voie sèche.

2. Dispositif de traitement d'un gaz d'échappement selon la revendication 1, dans lequel
un réchauffeur d'air et un collecteur de poussières électrique sont disposés entre ledit appareil de dénitration catalytique par voie sèche et ledit appareil de dénitration au plasma.

3. Dispositif de traitement d'un gaz d'échappement selon la revendication 1, dans lequel
un réchauffeur d'air, un collecteur de poussières électrique et un appareil de désulfuration de gaz d'échappement sont disposés entre ledit appareil de dénitration catalytique par voie sèche et ledit appareil dedénitration au plasma.

4. Dispositif de traitement d'un gaz d'échappement selon la revendication 1 ou 3, dans lequel
ledit appareil de dénitration au plasma est disposé dans une cheminée.
